# EUROPEAN PATENT APPLICATION

(11) **EP 4 521 828 A1**
(43) Date of publication of application: **12.03.2025**
(21) Application number: 23871711.0
(22) Date of filing: 31.08.2023
(51) Int. Cl.: H04W 52/02, H04W 24/10, H04W 72/1273

(54) **TERMINAL DEVICE THAT EFFICIENTLY CHANGES COMMUNICATION PARAMETER IN ACCORDANCE WITH TRAFFIC CHARACTERISTICS**

(30) Priority: 26.09.2022 JP 2022152532
(71) Applicant: KDDI Corporation, Tokyo 163-8003 (JP)
(72) Inventor: TAKEDA, Hiroki, Tokyo 163-8003 (JP); YAMAMOTO, Kenichi, Tokyo 163-8003 (JP); WATABE, Taisei, Tokyo 163-8003 (JP)
(74) Representative: Mathys & Squire
(86) International application number: PCT/JP2023/031802
(87) International publication number: WO 2024/070471

(57) **Abstract**

A terminal apparatus recognizes a first packet and a last packet in a case where a frame generated by an application executed by the terminal apparatus is transmitted in a state where the frame is divided into a plurality of packets, measures a time of reception of the recognized first packet, calculates a frame cycle and a fluctuation in the frame cycle from a result of the measurement, reports a result of the calculation to a base station apparatus. The terminal apparatus obtains, from the base station apparatus, information related to a frame on which a report is to be made.

## Description

### TECHNICAL FIELD

The present invention relates to a technique to change communication parameters in a cellular communication system.

### BACKGROUND ART

A cellular communication system can use functions for efficiently performing communication by periodically allocating wireless resources, such as a Configured Grant (CG) function and a Semi-Persistent Scheduling (SPS) function. Aiming at the standard of release 17 of the 3rd Generation Partnership Project (3GPP^{®}), a technique has been proposed that improves a communication capacity by optimizing parameters of the CG function and the SPS function in accordance with a traffic pattern of an application (NPL 1).

### CITATION LIST

### NON-PATENT LITERATURE

NPL 1: 3GPP Written Contributions, RP-220285, March, 2022

### SUMMARY OF INVENTION

### TECHNICAL PROBLEM

In actual application traffic, communications of a variety of traffic patterns are expected to be performed simultaneously.

### SOLUTION TO PROBLEM

The present invention provides an appropriate communication control technique that suits such traffic patterns in the foregoing situation.

A terminal apparatus according to one aspect of the present invention comprises: recognition means for recognizing a first packet and a last packet in a case where a frame generated by an application executed by the terminal apparatus is transmitted in a state where the frame is divided into a plurality of packets; measurement means for measuring a time of reception of the first packet recognized by the recognition means; calculation means for calculating a frame cycle and a fluctuation in the frame cycle from a result of the measurement by the measurement means; report means for reporting a result of the calculation to a base station apparatus; and obtainment means for obtaining, from the base station apparatus, information related to a frame on which a report is to be made by the report means.

A terminal apparatus according to one aspect of the present invention comprises: transmission means for transmitting uplink data using Configured Grant; obtainment means for obtaining information of a Configured Grant cycle and allocation of a wireless resource block from a base station apparatus using signaling in layer 3; reception means for receiving an instruction for changing the information of the Configured Grant cycle and the allocation of the resource block from the base station apparatus using signaling in layer 1 or layer 2; and request means for requesting the base station apparatus to change a timing of the allocation of the wireless resource block.

### ADVANTAGEOUS EFFECTS OF INVENTION

According to the present invention, appropriate communication control that suits traffic patterns can be carried out.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
[FIG. 1] FIG. 1 is a diagram showing an exemplary configuration of a wireless communication network.
[FIG. 2] FIG. 2 is a diagram showing an exemplary change in an SPS parameter.
[FIG. 3] FIG. 3 is a diagram showing an exemplary change in a CG parameter.
[FIG. 4A] FIG. 4A is a diagram showing an exemplary change in a CDRX parameter.
[FIG. 4B] FIG. 4B is a diagram showing an exemplary change in a CDRX parameter.
[FIG. 5] FIG. 5 is a diagram showing exemplary control on a plurality of DRX parameters.
[FIG. 6] FIG. 6 is a diagram showing an exemplary hardware configuration of an apparatus.
[FIG. 7] FIG. 7 is a diagram showing an exemplary functional configuration of a base station apparatus.
[FIG. 8] FIG. 8 is a diagram showing an exemplary functional configuration of a terminal apparatus.
[FIG. 9] FIG. 9 is a diagram showing an exemplary flow of processing executed in the wireless communication network.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (System Configuration)

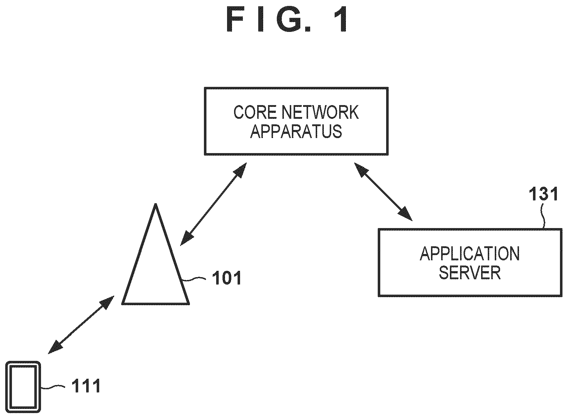

FIG. 1 shows an exemplary configuration of a wireless communication system according to the present embodiment. The wireless communication system can be, for example, a wireless communication system conforming with the fifth-generation (5G) cellular communication standard of the 3rd Generation Partnership Project (3GPP^{®}). The wireless communication system includes, for example, a base station apparatus 101, a terminal apparatus 111, a core network apparatus 121, and an application server 131. In one example, the terminal apparatus 111 exchanges user data related to application traffic with the application server 131 via the base station apparatus 101 and the core network apparatus 121.

The application traffic is traffic that is generated by an application and needs to be transmitted to another apparatus, or is received from another apparatus to be used by an application, and can take a variety of forms. For example, data is generated and transmitted/received by various applications, such as applications that realize video streaming, cloud gaming, haptic communication, tactile communication, and metaverses. Here, application traffic can be construed as an assembly of a plurality of data pieces that differ from one another in characteristics and data occurrence cycle. For example, in a case where the application is a game application, application traffic includes video information, sound information, operation information, and the like. Also, for example, in a case where the application is a video streaming application, application traffic can be defined as an assembly of video information and sound information. Furthermore, video information can be categorized into, for example, different types of video frames that are structured as a group of pictures (GOP), namely an I picture (I frame), a P picture (P frame), and a B picture (B frame). Note that the I frame, P frame, and B frame are respectively exchanged (between the terminal apparatus 111 and the application server 131, for example) in different cycles.

The aforementioned plurality of types of data to be exchanged included in the application traffic can include delay-tolerant data and delay-intolerant data. For example, among the aforementioned I frame, P frame, and B frame, the I frame is a frame which bears no dependency relationship with other frames and which alone can be decoded and generate an image, whereas the P frame is obtained by encoding the differences from data predicted from a previous frame, and the B frame is obtained by encoding the differences from data predicted from both of a previous frame and a forward frame; thus, the P frame and B frame are dependent on other frames. That is to say, as accurate decoding of the P frame and B frame is enabled by accurate reception of the I frame with no delay, it can be said that the I frame is delay-intolerant data. On the other hand, it is not always the case that delay is not tolerated for the P frame and B frame. With regard to such application traffic, periodical allocation of wireless resources is required in connection with delay-intolerant data so as to prevent the occurrence of delay. Meanwhile, although parameters of a CG function and an SPS function can be set so as to periodically allocate wireless resources also in connection with delay-tolerant data, this case may lead to unnecessary ensuring of wireless resources on a periodical basis. This can therefore trigger a situation where wireless resources have been ensured for data transmission that does not necessarily require ensuring of wireless resources in a cycle, thereby causing a shortage in wireless resources that can be allocated for delay-intolerant data that is requested by another terminal apparatus to be transmitted.

In the present embodiment, in view of the foregoing issue, when communications of a variety of traffic pattems are expected to be performed simultaneously, a traffic pattern related to data that significantly influences the operations of an application, such as the aforementioned I frame (key frame), is specified. Then, resource allocation is performed so that transmission/reception delay, a transmission/reception cycle, jitter (cycle fluctuation), and the like remain at or below prescribed values. The following describes a technique to enable such specification of traffic pattern and allocation of wireless resources. Note that although the following may mention an exemplary case where video frame data pieces that respectively correspond to an I frame, a P frame, and a B frame are exchanged as application traffic, these are merely examples of data, and the following discussion is applicable to application traffic composed of a combination of various forms of data.

In the present embodiment, for example, the core network apparatus 121 determines a frame type for which a traffic pattem is to be specified. In this case, the core network apparatus 121 notifies the base station apparatus 101 of information related to a frame type (e.g., at least one of an I frame, a P frame, and a B frame) for which a traffic pattern is to be specified. Also, at this time, the core network apparatus 121 may notify the base station apparatus 101 of frame characteristics information indicating the characteristics of a frame for which a traffic pattern is to be specified. The frame characteristics information includes, for example, at least one of a frame rate (frames per second or fps), a data rate (Mbps), the quality of service (QoS), the priority, the maximum value of transmission delay of packets (Packet Delay Budget), the packet error rate (Packet Error Loss Rate), the number of packets per frame, the number of PDUs, and the like. Furthermore, the notification about the aforementioned information related to a frame type for which a traffic pattern is to be specified, as well as the associated frame characteristics information, may be provided separately in the downlink direction (application server 131 → terminal apparatus 111) and the uplink direction (terminal apparatus 111 → application server 131). In this way, for example, when using a TDD communication method in which uplink transmission is a bottleneck, optimization of parameters of the CG function and the like can be performed by specifying a traffic pattern related to uplink communication in the direction of signal transmission from the terminal apparatus 111 to the base station apparatus 101. Also, to specify a traffic pattern in the uplink direction (terminal apparatus 111 → application server 131), the terminal apparatus 111 needs to obtain information related to a frame type targeted for the specification and the associated frame characteristics information. In this case, the terminal apparatus 111 obtains necessary information from, for example, the base station apparatus 101 or the core network apparatus 121.

Frames transmitted from the application server 131 are transmitted to the terminal apparatus 111 via the core network apparatus 121 and the base station apparatus 101. Each time the base station apparatus 101 receives a frame for which a traffic patteen is to be specified from the core network apparatus 121, it records the time of reception of the frame and the data size of the received frame. The base station apparatus 101 calculates the cycle and jitter (cycle fluctuation) of received frames from the recorded time of reception. Then, the base station apparatus 101 can use information of the calculated frame cycle in determining the parameters of SPS and CG. At this time, in a case where there are a plurality of frame cycles and frame data sizes, the base station apparatus 101 may apply statistical processing to these plurality of frame cycles and frame data sizes. For example, the base station apparatus 101 can specify a mode or an average value and a standard deviation of the plurality of frame cycles, use the mode or the average value as a frame cycle of data for which a traffic patteen is to be specified, and use the standard deviation as jitter (cycle fluctuation) of data for which a traffic pattern is to be specified.

As one working example, different PDU sessions can be established for different frame types between the base station apparatus 101 and the terminal apparatus 111. In this case, the base station apparatus 101 counts the time of reception of a received frame and the size of the received frame in each PDU session. This allows the base station apparatus 101 to easily distinguish the plurality of types of frames from one another using the PDU sessions, and count the time of frame reception and the frame size for each frame type. Also, as another working example, different QoS flows can be established for different frame types within the same PDU session. In this case, the base station apparatus 101 counts the time of reception of a received frame and the size of the received frame for each QoS flow. This allows the base station apparatus 101 to easily distinguish the plurality of types of frames from one another using the QoS flows, and count the time of frame reception and the frame size for each frame type. In addition, user data pieces of a plurality of types of frames can also be exchanged within the same QoS flow. In this case, in the apparatuses that process upper layers, such as the application server 131 and the core network apparatus 121, identifiers for identifying the frame types are appended to the user data pieces. Then, one of the function units that compose the base station apparatus 101, such as PDCP, RLC, and MAC, recognizes the frame types based on the appended identifiers, and counts the frame reception time and the size of the received frame for each frame type. Also, different network slices may be allocated to different frame types. In this case, data exchanged in the PDU session that is used by the network slice corresponding to the type of the frame to be counted, can be counted. Note that in a case where one network slice is realized by a plurality of PDU sessions, data pieces exchanged in all PDU sessions associated with this network slice can be counted. In the above-described working examples, the application server 131, the core network apparatus 121, and the base station apparatus 101 can be an application function (AF), a user plane function (UPF), and a gNB, respectively.

A frame that the base station apparatus 101 receives from the core network apparatus 121 can be burst data, which is transmitted/received after dividing one frame into a plurality of packets. In this case, the base station apparatus 101 needs to recognize which packet is the first packet of this frame (the packet that has been received first), and which packet is the last packet of this frame (the packet that has been received last). For this reason, for example, it is possible that the core network apparatus 121 determines a frame type, whether a packet is the first packet of the frame, and whether a packet is the last packet of the frame from information of an RTP header of each packet. As a result of this determination, for example, the core network apparatus 121 can append identifiers respectively to the first packet and the last packet of each frame. The base station apparatus 101 can determine whether a packet is the first packet of the frame or the last packet of the frame from the appended identifiers. Also, in another working example, the core network apparatus 121 may notify the base station apparatus 101 of the number of packets per frame; in this case, the base station apparatus 101 may specify the first packet and the last packet from information of the notified number of packets per frame. The base station apparatus 101 can specify a frame cycle by, for example, counting only the time of reception of the first packet. Furthermore, in a case where the number of packets per frame changes dynamically, the core network apparatus 121 can notify the base station apparatus 101 of the number of packets per frame at a timing at which such a change has been recognized.

In one embodiment, the base station apparatus 101 instructs the terminal apparatus 111 to specify a traffic pattern and measure a frame cycle. In this case, the base station apparatus 101 can notify the terminal apparatus 111 of a frame type for which a traffic pattern is to be specified. In this case, the base station apparatus 101 can further notify the terminal apparatus 111 of the aforementioned frame characteristics information, such as a frame rate (frames per second or fps), for specifying a traffic pattern of a video frame, for example. Also, the base station apparatus 101 can notify the terminal apparatus 111 of information related to a cycle and a time period of a report on the specified traffic pattern, and a format and a style of the report. Based on the notified information, the terminal apparatus 111 measures a traffic pattern and a frame cycle of a frame of a type targeted for the specification among the frames to be transmitted to the base station apparatus 101. Then, the terminal apparatus 111 can report the measurement result to the base station apparatus 101 using the format and style designated by the base station apparatus 101 in the cycle and time period designated by the same. Note that the base station apparatus 101 can instruct the terminal apparatus 111 to execute statistical processing with respect to measurement data of a plurality of frame cycles that have been measured. For example, the base station apparatus 101 transmits an instruction to the terminal apparatus 111 so that statistical information of the frame cycles, such as an average value, a maximum value, a minimum value, a mode, and a standard deviation, will be reported. Furthermore, the base station apparatus 101 may report the entirety of the measurement data of the measured frame cycles, or partial data that matches a specific condition.

Furthermore, in one example, the application server 131 may notify the base station apparatus 101 of an acceptable value of jitter (cycle fluctuation) of data transmitted in each frame, and the maximum value of transmission delay of packets (Packet Delay Budget), via the core network apparatus 121. In this case, the base station apparatus 101 compares the standard deviation and jitter (frame cycle fluctuation) of frame cycles that have been actually measured with the acceptable value of acceptable jitter notified from the core network apparatus 121, and notifies the core network apparatus 121 of the comparison result. Note that the base station apparatus 101 may notify the core network apparatus 121 of the standard deviation and jitter (frame cycle fluctuation) of frame cycles that have been actually measured. In this case, comparison between the measured values and the acceptable value can be performed by the core network apparatus 121 and the application server 131. The application server 131 can notify the base station apparatus 101 of the acceptable value of jitter and the maximum value of transmission delay of packets via the core network apparatus 121 when establishing a line necessary for an application. In this case, the base station apparatus 101 may determine whether the communication quality required for the line necessary for this application can be secured based on the jitter and delay that have been actually measured in the past, and notify the core network apparatus 121 and the application server 131 of the determination result.

Also, the application server 131 can notify the terminal apparatus 111 of the acceptable value of jitter and the maximum value of transmission delay of packets via the core network apparatus 121 and the base station apparatus 101 when establishing a line necessary for an application. In this case, the terminal apparatus 111 may determine whether the communication quality required for the line necessary for this application can be secured based on the jitter and delay that have been actually measured in the past, and notify the base station apparatus 101, the core network apparatus 121, and the application server 131 of the determination result. Note that the frame cycles can be measured in a plurality of internal function blocks inside the base station apparatus 101 and the terminal apparatus 111, such as Service Data Adaptation Protocol (SDAP), Packet Data Convergence Protocol (PDCP), Radio Link Control (RLC), and Medium Access Control (MAC). Furthermore, jitter (frame cycle fluctuation) can similarly be measured in a plurality of internal function blocks inside the base station apparatus 101 and the terminal apparatus 111. In addition, a measured value and an acceptable value of transmission delay of packets, too, can vary depending on how transmission delay is defined in each of the base station apparatus 101 and the terminal apparatus 111. As one example, transmission delay can be defined as a time period from when a Service Data Adaptation Protocol (SDAP) function block of the base station apparatus 101 has received a frame from the core network apparatus 121, to when the transmission of PDSCH including this frame is started. However, this is an example, and other definitions are naturally possible. In view of this, in order to allow the core network apparatus 121, the application server 131, and the base station apparatus 101 or the terminal apparatus 111 to use the same definitions of frame cycles, jitter (frame cycle fluctuation), and transmission delay, the core network apparatus 121 and the application server 131 may notify the base station apparatus 101 or the terminal apparatus 111 of information related to the definitions of frame cycles, jitter (frame cycle fluctuation), and transmission delay.

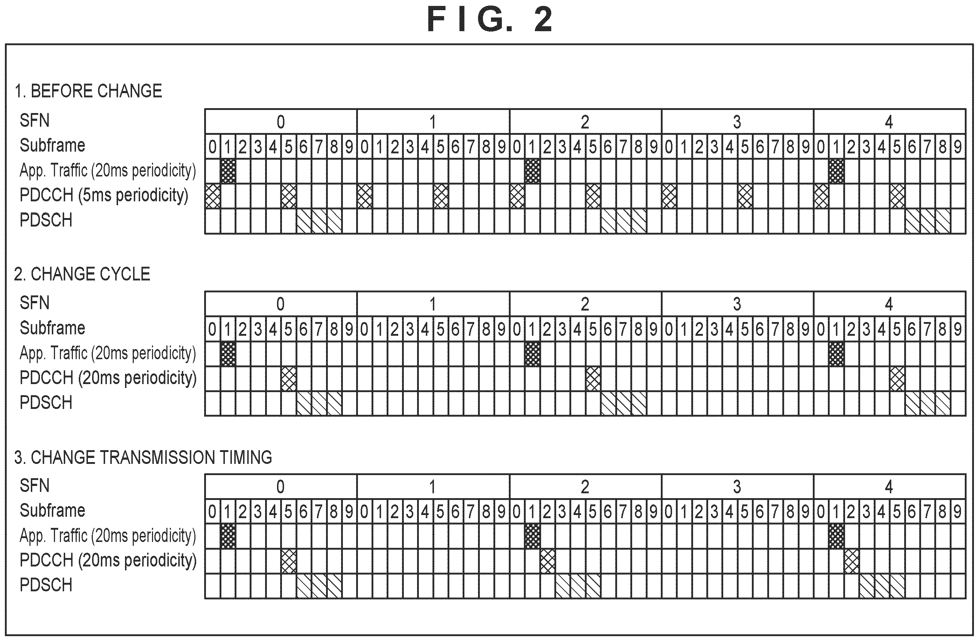

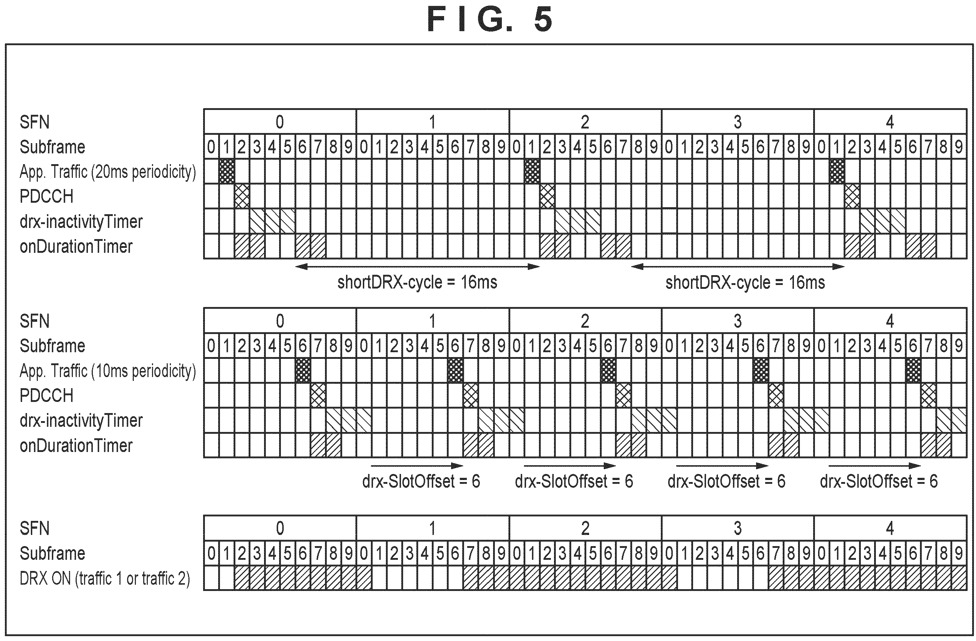

In the present embodiment, with use of Semi-Persistent Scheduling (SPS), the base station apparatus 101 periodically allocates wireless resources for transmitting downlink frames to the terminal apparatus 111 based on a traffic pattern and a frame cycle that have been specified by itself. For example, in each frame cycle, the base station apparatus 101 can configure a setting that allocates resource blocks for a downlink that are sufficient to transmit data composing one frame to the terminal apparatus 111. Semi-Persistent Scheduling (SPS) for periodically allocating resources is performed using signaling in layer 3 (an RRC Reconfiguration message), and it is possible to set a cycle of allocation of resources for a downlink based on periodicity included in SPS-Config inside this RRC Reconfiguration message. Note that in a case where a frame cycle changes during communication, the base station apparatus 101 can change the cycle of resource allocation using signaling in layer 1 or layer 2. Also, the base station apparatus 101 may set a plurality of cycles in advance using signaling in layer 3, and issue an instruction on a cycle to be actually used using signaling in layer 1 or layer 2. Furthermore, the base station apparatus 101 may determine resource blocks to be allocated to the terminal apparatus 111 in accordance with a specified traffic pattern, and issue an instruction to the terminal apparatus 111 using downlink control information (DCI) included in a physical downlink control channel (PDCCH). It is assumed here that, as indicated by "1" and "2" in FIG. 2, 5 ms and 20 ms are set as the first SPS cycle and the second SPS cycle, respectively, by layer 3 signaling. Note that "ms" refers to "millisecond", and one subframe in FIG. 2 corresponds to 1 ms. It is assumed here that, as indicated by "1" in FIG. 2, the cycle of application traffic has become 20 ms while the SPS cycle of 5 ms has been used, for example. In this case, using DCI transmitted via PDCCH, the base station apparatus 101 can transmit, to the terminal apparatus 111, an instruction for changing the SPS cycle from the first cycle of 5 ms to the second cycle of 20 ms indicated by "2" in FIG. 2. Also, in a case where frames transmitted to the terminal apparatus 111 are burst data, which is transmitted after dividing the frames into a plurality of packets, the base station apparatus 101 can issue an instruction for starting the periodical resource allocation, that is to say, enabling Semi-Persistent Scheduling (SPS), based on the cycle of transmission of the first packet in the frames. Furthermore, the base station apparatus 101 can issue an instruction for ending the periodical resource allocation, that is to say, disabling Semi-Persistent Scheduling (SPS), based on the transmission timing of the last packet of the frames. Note that although the foregoing description of the embodiment has been provided in relation to an example in which DCI is transmitted periodically, in a case where the size of the frame transmitted in each cycle is the same or falls within a specific size range, it is possible that the size and the position of resource blocks that are periodically allocated for transmission are the same; in this case, transmission of DCI may be omitted.

Furthermore, in another embodiment, the base station apparatus 101 measures a time period required from when it has received a frame from the core network apparatus 121 to when this frame is actually transmitted to the terminal apparatus 111. For example, in the examples of "1" and "2" in FIG. 2, the base station apparatus 101 receives, from the core network apparatus 121, a frame to be transmitted to the terminal apparatus 111 when SFN = 0 or 2 and subframe = 1. Then, the base station apparatus 101 transmits, to the terminal apparatus 111, control information for downlink data transmission via PDCCH when subframe = 5 in the same SFN, and downlink data of this frame via a physical downlink shared channel (PDSCH) in a time period of subframe = 6 to 8 in the same SFN. In this case, a time period of 4 ms is required from when the base station apparatus 101 has received a frame from the core network apparatus 121 to when the transmission of this frame to the terminal apparatus 111 is started. The base station apparatus 101 changes the timing of downlink data transmission to the terminal apparatus 111 so that the measured time period required until the start of transmission remains at or below the maximum value of transmission delay of packets (Packet Delay Budget) notified from the core network apparatus 121. For example, the base station apparatus 101 changes the timing of downlink data transmission by changing the transmission timing of downlink control information (DCI) included in the physical downlink control channel (PDCCH). For example, assume that, in a state where communication is performed in accordance with "2" in FIG. 2, transmission delay of packets is defined as a time period from the completion of arrival of application data to the start of transmission of PDSCH, and the maximum value of transmission delay of packets (Packet Delay Budget) is 2 ms. In this case, as indicated by "3" in FIG. 2, after PDSCH is transmitted when SFN = 0 and subframe = 8, the base station apparatus 101 shifts the next transmission timing of PDCCH from the timing of SFN = 2 and subframe = 5 to the timing of SFN = 2 and subframe = 2. The length of a subframe is 1 ms; accordingly, the delay time period can be shortened to 1 ms, which is equal to or shorter than Packet Delay Budget of 2 ms. Also, although the transmission timing of PDCCH is adjusted in FIG. 2, no limitation is intended by this. For example, the base station apparatus 101 may shift the transmission timing of data by transmitting PDCCH at the timing of SFN = 1 and subframe = 5, and by setting the transmission timing of PDSCH designated by this PDCCH at the timing of SFN = 2 and subframe = 2 to 4. This can also reduce the delay time period to Packet Delay Budget of 2 ms or shorter. Furthermore, in a case where data transmitted to the terminal apparatus 111 is burst data, when enabling Semi-Persistent Scheduling (SPS), the base station apparatus 101 may issue an instruction on transmission timings of PDCCH and PDSCH using downlink control information (DCI), which is an instruction for enabling Semi-Persistent Scheduling (SPS). In this case, an instruction for changing the timings may be issued so as to minimize the measured time period required until transmission. Note that although transmission delay of packets has been described above as a time period from the completion of arrival of application data to the start of transmission of PDSCH, transmission delay of packets may be defined in other forms; for example, transmission delay of packets may be from the start of arrival of application data to the completion of transmission of PDSCH, or may be from the completion of arrival of application data to the start of transmission of PDCCH.

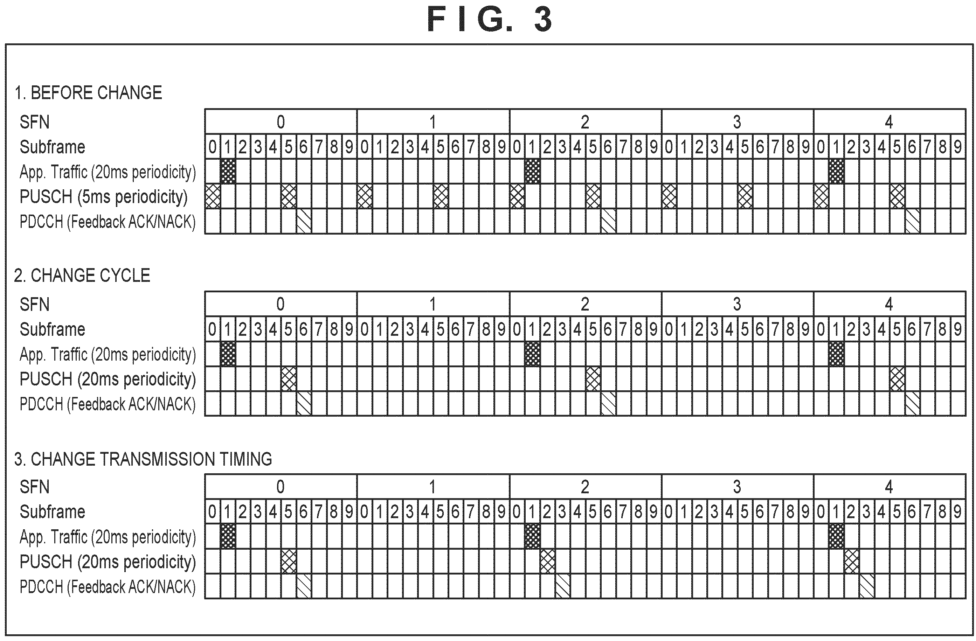

Furthermore, in one embodiment, based on a traffic pattern and a frame cycle reported from the terminal apparatus 111, the base station apparatus 101 can periodically allocate wireless resources that are intended for the terminal apparatus 111 to transmit uplink frames to the base station apparatus 101 with use of Configured Grant (CG). For example, in each frame cycle, the base station apparatus 101 can configure a setting that allocates resource blocks for an uplink that are sufficient to transmit data composing one frame to the terminal apparatus 111. The base station apparatus 101 can configure settings of CG for periodical resource allocation using signaling in layer 3 (an RRC Reconfiguration message). In this case, settings related to uplink resource blocks can be configured using timeDomainOffset, timeDomainAllocation, and frequency DomainAllocation included in rrc-ConfiguredUplinkGrant within the RRC Reconfiguration message. Also, the cycle of resource allocation can be set using periodicity included in ConfiguredGrantConfig inside the RRC Reconfiguration message. Note that in a case where the cycle and size of frames change during communication, the base station apparatus 101 can change the cycle of resource allocation and resource blocks to be allocated using signaling in layer 1 or layer 2. Furthermore, the base station apparatus 101 may set a plurality of cycles of resource allocation and a plurality of patterns of allocated resource blocks in advance using signaling in layer 3, and issue an instruction on settings to be actually used using signaling in layer 1 or layer 2. It is assumed here that, as indicated by "1" and "2" in FIG. 3, 5 ms and 20 ms are set as the first CG cycle and the second CG cycle, respectively, by layer 3 signaling. Note that one subframe corresponds to 1 ms in FIG. 3 as well. It is assumed here that, as indicated by "1" in FIG. 3, the cycle of application traffic has become 20 ms while the CG cycle of 5 ms has been used, for example. In this case, for example, in response to reception of data (a physical uplink shared channel (PUSCH)) when SFN = 0 and subframe = 5, the base station apparatus 101 transmits PDCCH including DCI indicating an ACK/NACK to this PUSCH to the terminal apparatus 111 when SFN = 0 and subframe = 6. At this time, using this DCI, the base station apparatus 101 can transmit information for instructing a change of the CG cycle from the first cycle of 5 ms to the second cycle of 20 ms to the terminal apparatus 111. Also, in a case where frames transmitted by the terminal apparatus 111 are burst data, which is transmitted after dividing one frame into a plurality of packets, the base station apparatus 101 can issue an instruction for starting the periodical resource allocation and enabling CG based on the cycle of transmission of the first packet in the frames. Then, the base station apparatus 101 can issue an instruction for ending the periodical resource allocation and disabling CG based on the transmission timing of the last packet in the frames.

Furthermore, in another embodiment, the terminal apparatus 111 measures a time period required from when the occurrence of a frame to be transmitted to the base station apparatus 101 is recognized to when this frame is actually transmitted to the base station apparatus 101. For example, the terminal apparatus 111 can request the base station apparatus 101 to correct the transmission timing of an uplink frame so that the measured time period required until the transmission remains at or below the maximum value of transmission delay of packets (Packet Delay Budget) notified from the core network apparatus 121. In this case, the terminal apparatus 111 can calculate a correction value so that a standby time period from the recognition of the occurrence of the transmission frame to the actual transmission of the frame becomes the shortest, or remains at or below Packet Delay Budget, and notify the base station apparatus 101 of the correction value. The base station apparatus 101 changes the timing of allocation of resource blocks based on the correction value received from the terminal apparatus 111. The base station apparatus 101 can instruct the terminal apparatus 111 to change the transmission timing by, for example, designating a positive/negative offset from the current transmission timing, which is represented by a frame(s) or a symbol(s), or a system frame number (SFN) with use of signaling in layer 1 or layer 2. For example, assumed that Packet Delay Budget is 2 ms in a state where communication is performed in accordance with "2" in FIG. 3. In this case, as indicated by "3" in FIG. 3, the terminal apparatus 111 transmits, to the base station apparatus 101, a request for timing correction using a correction value (e.g., -3 ms) that has been specified so as to make the delay equal to or shorter than 2 ms at the timing of transmission of PUSCH when SFN = 0 and subframe = 5 with use of signaling in layer 1 or layer 2. Based on the correction value included in the request, the base station apparatus 101 shifts the transmission timing of PUSCH from the timing of SFN = 2 and subframe = 5 to the timing of SFN = 2 and subframe = 2. At this time, the base station apparatus 101 can return information indicating whether it will comply with the correction value from the terminal apparatus 111 to the terminal apparatus. Also, in a case where the base station apparatus 101 performs correction using a value different from the correction value notified from the terminal apparatus 111, it may notify the terminal apparatus 111 of this value. Furthermore, the terminal apparatus 111 may report, to the base station apparatus 101, the standby time period from the recognition of the occurrence of the transmission frame to the actual transmission of the frame, and the base station apparatus 101 may determine a correction value so that the standby time period becomes the shortest or remains at or below Packet Delay Budget and change the transmission timing. For example, in the examples of "1" and "2" in FIG. 3, the terminal apparatus 111 can notify the base station apparatus 101 of the standby time period of 3 ms, and the base station apparatus 101 can determine the amount of shift in the allocation timing of PUSCH (e.g., 2 ms or 3 ms) by comparing the standby time period with the value of Packet Delay Budget (2 ms) held in itself. Then, the base station apparatus 101 can shift the allocation timing of PUSCH by the determined amount of shift, and further notify the terminal apparatus 111 of information including this shift in the allocation timing of PUSCH, a value indicating the amount of shift, and the like. Note that, for example, the base station apparatus 101 can notify the terminal apparatus 111 of this information using PDCCH including DCI for transmitting an ACK/NACK to the PUSCH received at the timing of SFN = 0 and subframe = 5. Using the foregoing method, the allocation timing of PUSCH can be changed from the timing of SFN = 2 and subframe = 5 to the timing of SFN = 2 and subframe = 2, and PUSCH can be transmitted at a timing at which Packet Delay Budget (= 2 ms) is satisfied. Note that the above working example has been described under the assumption that the terminal apparatus 111 measures, as a transmission delay, a time period required from when the occurrence of a frame to be transmitted to the base station apparatus 101 is recognized to when this frame is actually transmitted to the base station apparatus 101. In practice, this can be performed as a result of the terminal apparatus 111 recognizing the occurrence of a frame to be transmitted in a plurality of internal function blocks, such as Service Data Adaptation Protocol (SDAP), Packet Data Convergence Protocol (PDCP), Radio Link Control (RLC), and Medium Access Control (MAC). Also, "to when this frame is actually transmitted" can be interpreted in multiple ways: to when the transmission of PDSCH for this this frame is started, to when the transmission of PDSCH for this frame is completed, or to when an HARQ-ACK to PDSCH for this frame is received. Therefore, the base station apparatus 101 may notify the terminal apparatus 111 of information related to the definition of transmission delay so that the terminal apparatus 111 and the base station apparatus 101 can recognize the same definition of transmission delay.

Furthermore, in a case where a large number of terminal apparatuses are connected to the base station apparatus 101 and it is difficult for the base station apparatus 101 to periodically allocate wireless resources to the terminal apparatus 111 that uses a specific application using CG, dynamic allocation of wireless resources can be applied to this terminal apparatus 101. In dynamic allocation of wireless resources, before transmitting uplink data, the terminal apparatus 111 notifies the base station apparatus 101 of a transmission data size and a transmission buffer size using a buffer status report (BSR). Then, based on the notified transmission buffer size, the base station apparatus 101 allocates wireless resources for an uplink to be used by the terminal apparatus 111. The BSR is configured to give notice of the transmission buffer size using one of the values defined in two types of buffer size tables prescribed by the 3GPP standard. In contrast, in one working example of the present invention, a notification about the transmission buffer size can be provided via a BSR using another customized buffer size table for the frame data size specified by the base station apparatus 101. For example, in a case where the buffer size table has 5 bits, it is possible that the minimum value of the frame data size measured by the base station apparatus 101 is determined as the minimum value of the buffer size table, and a value obtained by dividing the difference between the maximum value and the minimum value of the buffer size tables by 25 - 1 = 31 is used as a step indicating the magnitude of the buffer size. In this case, the base station apparatus 101 notifies the terminal apparatus 111 of the number of bits in the buffer size table, and the minimum value and the maximum value of the buffer size table. Then, based on information obtained from the base station apparatus 101, the terminal apparatus 111 specifies the buffer size table, and encodes the transmission buffer size at the time of BSR transmission using this buffer size table. In this way, the buffer size table can be shared between the base station apparatus 101 and the terminal apparatus 111, and the base station apparatus 101 can decode the transmission buffer size indicated by the received BSR based on the buffer size table shared with the terminal apparatus 111. The base station apparatus 101 may notify the terminal apparatus 111 of information related to a plurality of buffer size tables. In this case, the terminal apparatus 111 can notify the base station apparatus 101 of which one of the notified plurality of buffer size tables has been used in representation of the transmission buffer size at the time of BSR transmission. Furthermore, the terminal apparatus 111 may notify the base station apparatus 101 of a standby time period from when the terminal apparatus 111 has recognized the occurrence of a transmission frame to the base station apparatus 101 to when the frame is actually transmitted, together with the transmission buffer size, at the time of BSR transmission. Note that although the above has described an example in which the base station apparatus 101 sets a buffer size table used for a BSR, no limitation is intended by this. That is to say, the terminal apparatus 111 may request the base station apparatus 101 to set a buffer size table. In this case, the terminal apparatus 111 can notify the base station apparatus 101 of the number of bits in the buffer size table, and the minimum value and the maximum value of the buffer size table. Also, at this time, the terminal apparatus 111 may notify the base station apparatus 101 of the number of bits in and the median value of the buffer size table, and a buffer size indicated by one bit.

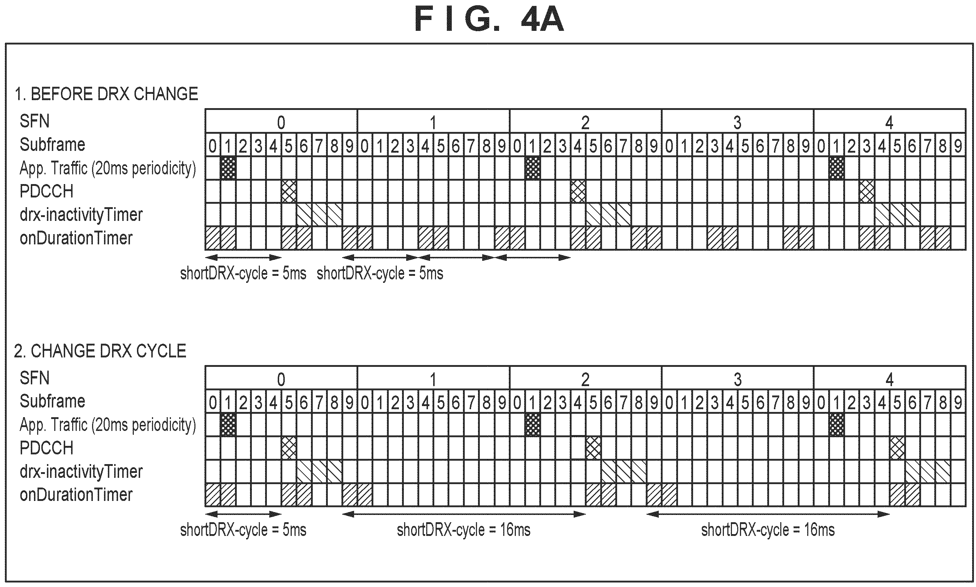

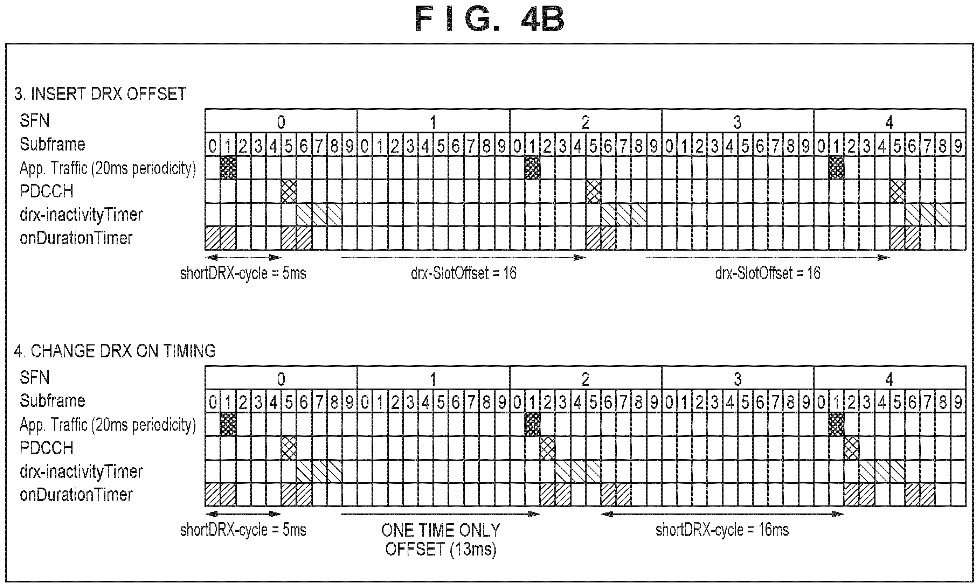

Furthermore, in one embodiment, the base station apparatus 101 can change parameters related to Connected Discontinuous Reception (CDRX) based on the specified traffic pattern and frame cycle. As one example, a method of changing parameters will be described using an exemplary case where, as indicated by "1" in FIG. 4A, CDRX is in operation under a shortDRX-Cycle (short DRX cycle) = 5 ms, an onDurationTimer (a timer that controls a time period in which DRX ON is maintained) = 2 ms, and a drx-inactivityTimer (a DRX inactivity timer that is activated to maintain DRX ON for a certain time period after receiving PDCCH) = 3 ms. The base station apparatus 101 recognizes a frame cycle by measuring the time of frame reception from the core network apparatus 121. According to "1" or the like in FIG. 4A, a transmission frame to the terminal apparatus 111 occurs at 1 ms, 21 ms, and 41 ms (subframe = 1 under SFN = 0, 2, or 4), and the base station apparatus 101 recognizes the occurrence of a frame in a cycle of 20 ms. The base station apparatus 101 may change the shortDRX-Cycle from 5 ms to 16 ms based on this frame cycle as indicated by "2" in FIG. 4A, for example; also, the base station apparatus 101 may newly set a drx-SlotOffset = 16 ms as indicated by "3" in FIG. 4B. Furthermore, the base station apparatus 101 may change parameters by setting the drx-inactivity Timer and the shortDRX-Cycle at 0 ms and 20 ms, respectively. The base station apparatus 101 can instruct the terminal apparatus 111 to change parameters using, for example, DCI transmitted via PDCCH when SFN = 0 and subframe = 5. Also, the base station apparatus 101 may set a plurality of setting values with respect to the shortDRX-Cycle, drx-SlotOffset, and drx-inactivity Timer using signaling in layer 3 in advance, and issue an instruction on setting values to be actually used using DCI. Note that in a case where the specified traffic pattern is not an integral multiple of a subframe, it is permissible to repeat a plurality of shortDRX-Cycles a specific number of times by setting a shortDRX-Cycle = 16 ms, a shortDRX-Cycle = 16 ms, and a shortDRX-Cycle = 17 ms. In this case, a DRX pattern can be set on the terminal apparatus 111 using the first DRX-Cycle, the number of times the first DRX-Cycle is repeated, the second DRX-Cycle, and the number of times the second DRX-Cycle is repeated. Note that in this case, an instruction on the number of repetitions of the DRX-Cycle cycle may be issued using DCI. Furthermore, a plurality of values may be set with respect to a plurality of drx-SlotOffsets and drx-inactivity Timers, rather than the shortDRX-Cycle, and each value may be repeatedly used in correspondence with the specific number of repetitions.

Furthermore, the base station apparatus 101 can notify the terminal apparatus of an offset value for adjusting the timings of DRX ON and DRX OFF so as to minimize the transmission delay of downlink frames to the terminal apparatus 111, which occurs due to the time period of DRX OFF. In the examples of FIG. 4A and FIG. 4B, in a case where no adjustment is made, a transmission frame occurs when SFN = 2 and subframe = 1, PDCCH (DCI) for transmitting this frame is transmitted when SFN =2 and subframe = 5, and the frame is actually transmitted when SFN = 2 and subframe = 6, as indicated by "1" in FIG. 4A. In this case, a delay of 5 ms occurs. In this case, it is possible that the base station apparatus 101 issues an instruction indicating an offset value = 13 ms until the start of DRX ON, which is used only once after the drx-inactivity Timer expires, using DCI transmitted when SFN = 0 and subframe = 5 as indicated by "4" in FIG. 4B. Upon receiving this offset value until the start of DRX ON, which is used only once, the terminal apparatus 111 causes DRX ON when SFN = 2 and subframe = 2 as indicated by "4" in FIG. 4B. Therefore, after the occurrence of the transmission frame, the base station apparatus 101 can transmit PDCCH (DCI) for transmitting downlink data without any delay. Note that although the foregoing has described an example in which the offset value for adjusting the timings of DRX ON and DRX OFF are determined so as to enable transmission of PDCCH (DCI) for transmitting downlink data immediately after the transmission frame arrives at the base station apparatus 101, no limitation is intended by this. That is to say, the base station apparatus 101 may determine an offset value in a range that remains at or below Packet Delay Budget. While an application is in use, the base station apparatus 101 can periodically confirm a delay time period that dynamically changes depending on the transmission status of downlink frames, determine an appropriate offset value as necessary each time the confirmation is made, and instruct the terminal apparatus 111 to change the timings of DRX ON and DRX OFF.

Although the above has described an example in which parameters related to CDRX are changed based on the cycle of downlink application frames that are periodically transmitted from the base station apparatus 101 to the terminal apparatus 111, parameters related to CDRX may be changed based on the cycle of uplink application frames that are periodically transmitted from the terminal apparatus 111 to the base station apparatus 101. In this case, the base station apparatus 101 changes the shortDRX-Cycle, drx-SlotOffset, and drx-inactivity Timer based on the traffic pattern and the frame cycle reported from the terminal apparatus 111. Also, the terminal apparatus 111 may request the base station apparatus 111 to correct the timings of DRX ON and DRX OFF so as to minimize the transmission delay of uplink frames from the terminal apparatus 111 to the base station apparatus 101, which occurs due to the time period of DRX OFF. At this time, the terminal apparatus 111 may notify the base station apparatus 101 of a correction value indicating to what extent the timing correction should be performed. As one example, the terminal apparatus 111 gives notice of an offset value until the start of DRX ON, which is used only once after the drx-inactivityTimer expires, at the timing of PUSCH transmission to the base station apparatus 101 using signaling in layer 1 or layer 2, and requests the base station apparatus 101 to correct the timings of DRX ON and DRX OFF.

Furthermore, the traffic pattern and the frame cycle to be taken into consideration can come in two types. For example, as shown in FIG. 5, in a case where frames of a 20-ms cycle (traffic 1) and frames of a 10-ms cycle (traffic 2) occur simultaneously, DRX control can be performed with respect to the frames of each cycle, and the terminal apparatus 111 can be controlled so as to monitor PDCCH when DRX for one of the cycles is ON (OR condition), that is to say, at 2 ms to 10 ms, 17 ms to 30 ms, and 37 ms to 49 ms in FIG. 5. Also, in the case of FIG. 5, the terminal apparatus 111 may be controlled so that the time period of DRX ON can be extended rather than tolerating the transmission delay by bringing the transmission timing of PDCCH (DCI) for transmitting frames of the 20-ms cycle (traffic 1) in conformity with the transmission timing of PDCCH (DCI) for frames of the 10-ms cycle (traffic 2). In addition, for example, frames of the 20-ms cycle (traffic 1) shown in FIG. 5 may be DRX control based on CG, which is the transmission cycle of uplink frames, and frames of the 10-ms cycle (traffic 2) may be DRX control based on SPS, which is the transmission cycle of downlink frames.

Note that although the above has described control for a case where there are two types of frame cycles, there may be two or more types of frame cycles. In this case, the base station apparatus 101 can, for example, configure a plurality of DRX settings on the terminal apparatus 111 using signaling in layer 3, such as RRC Reconfiguration, and dynamically issue an instruction indicating which DRX setting is to be activated or deactivated using signaling in layer 1 or layer 2, such as DCI. In a case where the instruction indicates that there are a plurality of DRX settings to be activated, the terminal apparatus 111 can operate so as to monitor PDCCH during DRX ON for one of these DRX settings. Also, in order to minimize consumed power, control may be performed so as to activate only one DRX setting among the plurality of DRX settings, thereby restricting a time period in which the terminal apparatus 111 monitors PDCCH, rather than tolerating the transmission delay.

Furthermore, in a case where frames transmitted from the terminal apparatus 111 to the base station apparatus 101 are burst data, which is transmitted after dividing one frame into a plurality of packets, or in a case where frames transmitted from the base station apparatus 101 to the terminal apparatus 111 are burst data, the cycle of burst data and the duration of burst data can be specified from the cycle of transmission of the first packet in the frames and the transmission timing of the last packet in the frames. The cycle of DRX ON, the duration of DRX ON, a time period in which periodical resource allocation based on CG and SPS is performed, a time period in which such periodical resource allocation is not performed, a time period in which a BSR is transmitted, and a time period in which a BSR is not transmitted, can be determined based on the cycle of burst data and the duration of burst data. Also, an sr-prohibitTimer, which is a timer for controlling a time period in which BSR transmission is prohibited, may be determined based on the cycle of burst data and the duration of burst data. In addition, in a case where the core network apparatus 121 and the application server 131 notify the base station apparatus 101 of the cycle of burst data, the number of received data packets per burst cycle, and the size of received data packets, the duration of burst data may be theoretically calculated from such notified information and the transmission speed in a wireless section.

Note that in the present embodiment, the base station apparatus 101 can provide/configure notifications, instructions, and settings to/on the terminal apparatus 111 via signaling in layer 1, which uses downlink control information (DCI), and signaling in layer 2, which uses downlink medium access control and control element (DL MAC CE). Also, the terminal apparatus 111 can provide notifications, requests, and reports to the base station apparatus 101 via signaling in layer 1, which uses uplink control information (UCI), and signaling in layer 2, which uses uplink medium access control and control element (UL MAC CE). Furthermore, the base station apparatus may be notified of capability information (UE Capability) in relation to whether the terminal apparatus is provided with the above-described functions related to specification of traffic pattern, measurement of a frame cycle, and transmission delay, and each of the functions of changing the cycles and timings of SPS, CG, and DRX, setting a buffer size tables, and so forth. In this case, the base station apparatus 101 can instruct the terminal apparatus 111 to execute each function in accordance with the capability information notified from the terminal apparatus 111.

### (Apparatus Configuration)

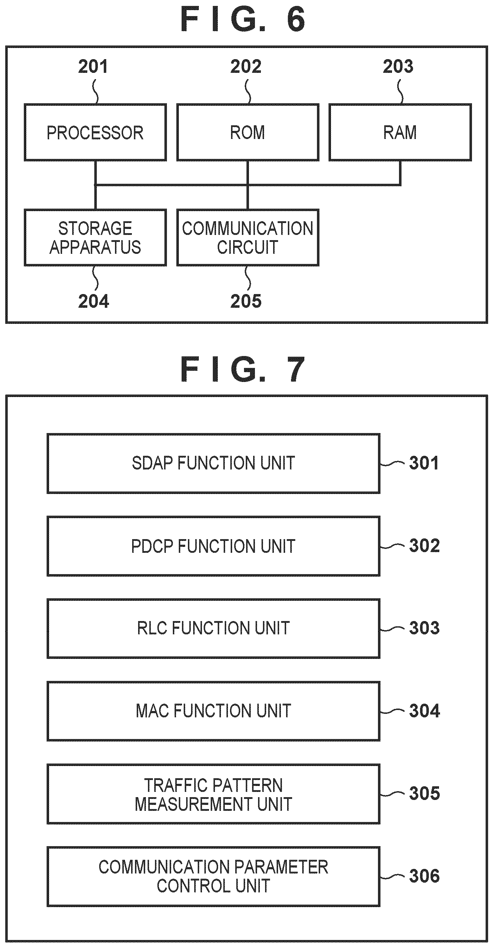

An exemplary hardware configuration of the base station apparatus and the terminal apparatus will be described using FIG. 6. In one example, the base station apparatus and the terminal apparatus are configured to include a processor 201, a ROM 202, a RAM 203, a storage apparatus 204, and a communication circuit 205. The processor 201 is a computer configured to include one or more processing circuits, such as a general-purpose central processing unit (CPU) and an application-specific integrated circuit (ASIC), and executes processing of the entire apparatus and each type of processing described above by reading out a program stored in the ROM 202 and the storage apparatus 204 and executing the program. The ROM 202 is a read-only memory that stores information of the program related to processing executed by the base station apparatus and the terminal apparatus, various types of parameters, and so forth. The RAM 203 is a random-access memory that functions as a working space when the processor 201 executes the program, and stores temporary information. The storage apparatus 204 is composed of, for example, an attachable/removable external storage apparatus or the like. The communication circuit 205 is composed of, for example, a circuit for wireless communication according to the standards of 5G and its successor. Note that although FIG. 6 illustrates one communication circuit 205, for example, the base station apparatus and the terminal apparatus may include two or more communication circuits. Also, for example, the base station apparatus and the terminal apparatus can include an antenna shared with the wireless communication circuit for 5G and for the standard of its successor. Note that the base station apparatus and the terminal apparatus may include an antenna for 5G and an antenna for the standard of its successor separately. Furthermore, the terminal apparatus may include a communication circuit for another wireless communication network, such as a wireless LAN. Note that the base station apparatus and the terminal apparatus may include individual communication circuits that respectively correspond to a plurality of usable frequency bands, or may include a shared communication circuit for at least a part of these frequency bands. Note that in the present embodiment, it is assumed that the terminal apparatus includes a plurality of communication circuits that can perform communication in the same frequency band. Moreover, the base station apparatus can further include a wired communication circuit used in communication with nodes of another base station apparatus and the core network.

FIG. 7 is a diagram showing an exemplary functional configuration of the base station apparatus. The base station apparatus includes, as functions thereof, a Service Data Adaptation Protocol (SDAP) function unit 301, a Packet Data Convergence Protocol (PDCP) function unit 302, a Radio Link Control (RLC) function unit 303, a Medium Access Control (MAC) function unit 304, a traffic pattern measurement unit 305, and a communication parameter control unit 306, for example. Note that in FIG. 7, only the functions that are particularly related to the present embodiment are illustrated, and the illustration of other various types of functions that can be included in the base station apparatus is omitted. For example, the base station apparatus naturally includes other functions that are generally included in a base station apparatus according to the standards of 5G and its successor. Also, the function blocks of FIG. 7 are schematically illustrated; the discrete function blocks may be realized in an integrated manner, or may be further segmentalized. Furthermore, each function of FIG. 7 may be realized by, for example, the processor 201 executing the program stored in the ROM 202 and the storage apparatus 204, or may be realized by, for example, a processor that is present inside the communication circuit 205 executing predetermined software. Note that regarding the details of processing executed by each function unit, the following does not describe the aforementioned details, and provides an overview of only general functions thereof.

Upon receiving a transmission frame to the terminal apparatus 111 from a function unit located in an upper layer, each of the SDAP function unit 301, the PDCP function unit 302, the RLC function unit 303, and the MAC function unit 304 specifies the time of this reception and the data size of this frame, and notifies the traffic pattern measurement unit 305 of the specified information. Note that these function units are equivalent to a protocol stack in the User Plane; the SDAP function unit 301 corresponds to the highest layer among these function units, the PDCP function unit 302 corresponds to the second highest layer, the RLC function unit 303 corresponds to the third highest layer, and the MAC function unit 304 corresponds to the lowest layer among these function units. The traffic pattern measurement unit 305 calculates a traffic cycle from the reception time, and executes statistical processing with respect to a plurality of frame cycles that are calculated. The traffic pattern measurement unit 305 calculates, for example, statistical information, such as the average value, maximum value, minimum value, mode, and standard deviation of the frame cycles. Furthermore, with respect to data sizes as well, the traffic pattern measurement unit 305 can calculate statistical information, such as the average value, maximum value, minimum value, mode, and standard deviation. Moreover, in a case where a frame generated by the application is burst data, which is transmitted after dividing the frame into a plurality of packets, the traffic pattern measurement unit 305 obtains the reception times of the first packet and the last packet from the SDAP function unit 301, PDCP function unit 302, RLC function unit 303, and MAC function unit 304. In this way, the traffic pattern measurement unit 305 calculates the cycle of burst data and the duration of burst data in each function unit. With respect to the cycle of burst data and the duration of burst data as well, it is expected that a plurality of pieces of data are obtained, and the traffic pattern measurement unit 305 calculates statistical information, such as the average value, maximum value, minimum value, mode, and standard deviation. Also, the traffic pattern measurement unit 305 can request each function unit to provide measurement data, such as the reception times of frames, while focusing only on information related to specific frames to be measured. In this case, each function unit provides data related to the PDU sessions, QoS flows, and network slices related to the specific frames as necessary. It is possible that each function unit determines the frames to be measured from identifiers appended by an upper layer, such as the application server 131 and the core network apparatus 121, and records the reception times of the frames.

The traffic pattern measurement unit 305 notifies the communication parameter control unit 306 of information of the frame cycle, the frame size, the cycle of burst data, the duration of burst data, and the like. Based on the received information, the communication parameter control unit 306 determines parameters of SPS, CG, and DRX, and configures settings of the terminal apparatus 111 using these parameters. When notified of new information by the traffic pattern measurement unit 305 during communication, the communication parameter control unit 306 determines whether each parameter needs to be changed based on this notified information. Then, in a case where the communication parameter control unit 306 has determined that the change is needed, it requests the terminal apparatus 111 to change the settings.

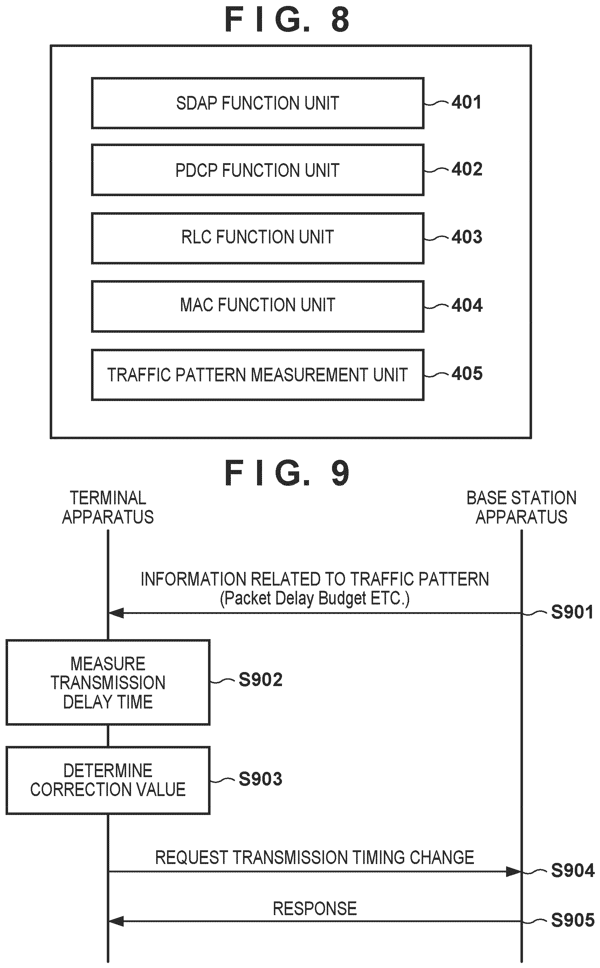

FIG. 8 is a diagram showing an exemplary functional configuration of the terminal apparatus. The terminal apparatus includes, as functions thereof, an SDAP function unit 401, a PDCP function unit 402, an RLC function unit 403, a MAC function unit 404, and a traffic pattern measurement unit 405, for example. Note that in FIG. 8, only the functions that are particularly related to the present embodiment are illustrated, and the illustration of other various types of functions that can be included in the terminal apparatus is omitted. For example, the terminal apparatus naturally includes other functions that are generally included in a terminal apparatus according to the standards of 5G and its successor. Also, the function blocks of FIG. 8 are schematically illustrated; the discrete function blocks may be realized in an integrated manner, or may be further segmentalized. Furthermore, each function of FIG. 8 may be realized by, for example, the processor 201 executing the program stored in the ROM 202 and the storage apparatus 204, or may be realized by, for example, a processor that is present inside the communication circuit 205 executing predetermined software. Note that regarding the details of processing executed by each function unit, the following does not describe the aforementioned details, and provides an overview of only general functions thereof.

The SDAP function unit 401, PDCP function unit 402, RLC function unit 403, and MAC function unit 404 are similar to corresponding function units in the base station apparatus, and respectively correspond to discrete layers of a protocol stack in the User Plane. The traffic pattern measurement unit 405 receives an instruction for specifying a traffic pattern and measuring a frame cycle from the base station apparatus. Based on the instruction from the base station apparatus, the traffic pattern measurement unit 405 requests the SDAP function unit 401, PDCP function unit 402, RLC function unit 403, and MAC function unit 404 to provide data related to the measurement. As one example, the data related to the measurement can be the time when each function unit received a frame from a function unit in an upper layer, the frame size, and a delay time period from when each function unit received the frame from an upper layer to when the frame is transmitted to a function unit in a lower layer. Furthermore, the delay time period measured in the MAC function unit 404 may include transmission of a BSR for a frame transmitted to the base station apparatus, and a time period until uplink wireless resources are actually allocated after the base station apparatus has received the BSR. With respect to data pieces obtained from the respective function units, the traffic pattern measurement unit 405 calculates statistical information, such as the average value, maximum value, minimum value, mode, and standard deviation, as necessary, and reports the obtained data pieces and the result of calculation of the statistical information to the base station apparatus.

The traffic pattern measurement unit 405 notifies the MAC function unit 404 of information of the frame cycle, the frame size, the cycle of burst data, the duration of burst data, and the like. Based on the information obtained from the traffic pattern measurement unit 405, the MAC function unit 404 determines the settings of an appropriate buffer size table, and notifies the base station apparatus of the number of bits in the buffer size table and the minimum value and the maximum value of the buffer size table, which are examples of the determination result. Also, the MAC function unit 404 can request the base station apparatus 101 to correct the transmission timing of an uplink frame so that the measured delay time period required until transmission remains at or below the maximum value of transmission delay of packets (Packet Delay Budget) notified from the core network apparatus and the base station apparatus.

### (Flow of Processing)

Next, an exemplary flow of processing executed in the wireless communication system will be described using FIG. 9. The following describes an example of a case where the terminal apparatus 111, which is connected to the base station apparatus 101 as shown in FIG. 1, makes a request for correction of the transmission timing of an uplink frame, that is to say, a case where the terminal apparatus 111 requests the base station apparatus 101 to correct the transmission timing of an uplink frame so that the transmission delay time period that has been actually measured remains at or below the maximum value of transmission delay of packets (Packet Delay Budget).

First, the terminal apparatus 111 obtains, from the base station apparatus 101, information related to a frame type for which a traffic pattern is to be specified, and frame characteristics information (S901). For example, the base station apparatus 101 notifies the terminal apparatus 111 of a Logical Channel identity (LCID), a DRB-Identity, a PDU-SessionID, and a QFI value (QoS flow) that are used in transmission/reception of a frame for which a traffic pattern is to be specified. At this time, a notification about characteristics information of a video frame for which the specification is to be performed, such as the frame rate (frames per second or fps), the data rate (Mbps), the Quality of Service (QoS), priority, the maximum value of transmission delay of packets (Packet Delay Budget), the packet error rate (Packet Error Loss Rate), the number of packets per frame, and the number of PDUs (of the video frame, for example), can also be additionally provided using, for example, layer 3 signaling, such as RRC Reconfiguration. In a case where there are a plurality of frames for which a traffic pattern is to be specified, for example, a notification about a list of information pieces that are the same in number as the frames for which a traffic pattern is to be specified can be provided, like Packet Delay Budget = 2 ms for LCID = 1, and Packet Delay Budget = 5 ms for LCID = 2.

The terminal apparatus 111 measures a time period required from when the occurrence of a transmission frame is recognized to when this frame is actually transmitted to the base station apparatus 101 (S902). As one example, the terminal apparatus 111 measures a time period required from the timing at which the MAC function unit inside the terminal apparatus 111 receives the transmission frame from the RLC function unit in an upper layer, to the timing of actual transmission of PUSCH including this frame. Note that the timing of the start of the measured time period is not limited to the time of frame reception by the MAC function unit, and may be the time when the RLC function unit, PDCP function unit, SDAP function unit, or the like receives this frame from a function unit located in an upper layer, or the time when this frame is transmitted to a function unit located in a lower layer. Furthermore, the timing of the end of the measured time period may be one of the time when the terminal apparatus 111 receives DCI including information related to wireless resource allocation for frame transmission, the time when frame transmission via PUSCH is started, and the time when frame transmission via PUSCH is ended.

Using the aforementioned measured value and the maximum value of transmission delay of packets (Packet Delay Budget), the terminal apparatus 111 determines a correction value for the transmission timing of an uplink frame (S903). Here, in a case where there are a plurality of measured values, the terminal apparatus 111 may determine the correction value using an average value and a mode, or may determine the correction value without using Packet Delay Budget. The correction value can be represented using a positive/negative offset from the current transmission timing, which is represented by the number of frames or the number of symbols, or a system frame number (SFN).

The terminal apparatus 111 requests the base station apparatus 101 to change the transmission timing (S904). For example, the terminal apparatus 111 can notify the base station apparatus 101 of a request to change the transmission timing using signaling in layer 1 or layer 2. At this time, the terminal apparatus 111 may further notify the base station apparatus 101 of the determined correction value. Also, the request to change the transmission timing and the notification about the correction value may be provided using a BSR.

The base station apparatus 101 determines whether it will comply with the request to change the transmission timing from the terminal apparatus 111, and returns the determination result to the terminal apparatus 111 (S905). For example, the base station apparatus 101 returns information indicating whether it will comply with the correction value from the terminal apparatus 111 to the terminal apparatus. Also, in a case where the base station apparatus 101 performs correction using a value different from the correction value notified from the terminal apparatus 111, it may notify the terminal apparatus 111 of this different correction value. Furthermore, it is possible that the base station apparatus 101 provides, via PDCCH, a notification about the timing of allocation of wireless resources for PUSCH to be allocated to the terminal apparatus 111 as an alternative to the response.

As described above, in a situation where communications of a variety of traffic patterns are expected to be performed simultaneously in actual application traffic, the present embodiment can provide appropriate communication control that suits these traffic patterns. This makes it possible to contribute to Goal 9 of Sustainable Development Goals (SDGs) led by the United Nations, which is to "build resilient infrastructure, promote inclusive and sustainable industrialization, and foster innovation".

The invention is not limited to the foregoing embodiments, and various variations/changes are possible within the spirit of the invention.

The present application claims the benefit of priority from Japanese Patent Application No. 2022-152532 filed on September 26, 2022, which is hereby incorporated by reference herein in its entirety.

## Claims

1. A terminal apparatus, **characterized by** comprising:
recognition means for recognizing a first packet and a last packet in a case where a frame generated by an application executed by the terminal apparatus is transmitted in a state where the frame is divided into a plurality of packets;
measurement means for measuring a time of reception of the first packet recognized by the recognition means;
calculation means for calculating a frame cycle and a fluctuation in the frame cycle from a result of the measurement by the measurement means;
report means for reporting a result of the calculation to a base station apparatus; and
obtainment means for obtaining, from the base station apparatus, information related to a frame on which a report is to be made by the report means.

2. A terminal apparatus, **characterized by** comprising:
transmission means for transmitting uplink data using Configured Grant;
obtainment means for obtaining information of a Configured Grant cycle and allocation of a wireless resource block from a base station apparatus using signaling in layer 3;
reception means for receiving an instruction for changing the information of the Configured Grant cycle and the allocation of the resource block from the base station apparatus using signaling in layer 1 or layer 2; and
request means for requesting the base station apparatus to change a timing of the allocation of the wireless resource block.

3. A terminal apparatus, **characterized by** comprising:
notification means for notifying a base station apparatus of a transmission buffer size using a buffer status report (BSR); and
obtainment means for obtaining a minimum value, the number of bits, and a size of a step corresponding to one bit in a buffer size table that is used in the notification of the BSR.

4. The terminal apparatus according to claim 3, **characterized by** further comprising
report means for reporting a transmission standby time period to the base station apparatus using the BSR, the transmission standby time period being from when transmission data is recognized by a function of medium access control (MAC) included in the terminal apparatus, to when the transmission data is transmitted via a physical uplink shared channel (PUSCH).
